# EUROPÄISCHE PATENTANMELDUNG

(11) **EP 1 829 468 A1**
(43) Veröffentlichungstag der Anmeldung: **05.09.2007**
(21) Anmeldenummer: 06122924.1
(22) Anmeldetag: 25.10.2006
(51) Int. Cl.: A47J 31/06, A47J 31/46

(54) **Brühvorrichtung für einen Kaffeeautomaten**

(30) Priorität: 27.01.2006 DE 202006001316 U
(71) Anmelder: MELITTA HAUSHALTSPRODUKTE GmbH & Co. Kommanditgesellschaft, D-32427 Minden (DE)
(72) Erfinder: Ruckstuhl, Stephan, 4623, Neuendorf (CH)
(74) Vertreter: Dantz, Jan Henning

(57) **Zusammenfassung**

Eine Brühvorrichtung für einen Kaffeeautomaten, insbesondere für den Haushaltsbereich, umfasst ein eine Brühkammer (19) umgebendes Gehäuse (10), an dessen einer Seite eine Brause (8, 9, 11) und einer gegenüberliegenden Seite ein Boden (12) mit einem Abfluss (40) für das gebrühte Fluid angeordnet ist, wobei zwischen Brause (8, 9, 11) und Gehäuse (10) ein flexibles Dichtelement (20) vorgesehen ist, auf dessen einer Seite die Brühkammer (19) und auf der gegenüberliegenden Seite eine mit Fluid befüllbare Kammer (31) angeordnet ist. Über einen Druckanstieg in der Kammer (31) ist das Dichtelement (20) zu der Brühkammer (19) hin bewegbar, wobei die Kammer (31) zur Entlastung des Dichtelementes (20) mit einem Entlüftungsventil (32) verbunden ist. Dadurch kann nach dem Brühvorgang der Druck in der Kammer auf Umgebungsdruck reduziert werden.

## Beschreibung

Die vorliegende Erfindung betrifft eine Brühvorrichtung für einen Kaffeeautomaten, insbesondere für den Haushaltsbereich, mit einem eine Brühkammer umgebenen Gehäuse, an dessen einer Seite eine Brause und an der gegenüberliegenden Seite ein Boden mit einem Abfluss für das gebrühte Fluid angeordnet ist, wobei zwischen Brause und Gehäuse ein flexibles Dichtelement vorgesehen ist, auf dessen einer Seite die Brühkammer und auf dessen gegenüberliegender Seite eine mit Fluid befüllbare Kammer angeordnet ist, und über einen Druckanstieg in der Kammer das Dichtelement zu der Brühkammer hin bewegbar ist.

Aus der nachveröffentlichten EP 1625 813 ist eine Brühvorrichtung für einen Kaffeeautomaten bekannt, bei der eine Brühkammer auf einer Seite durch ein flexibles Dichtelement begrenzt wird, das während des Brühvorganges zu der Brühkammer bewegbar ist und dadurch ein in der Brühkammer befindliches Extraktionsgut immer allseitig gut umschlossen ist. Dies verbessert die Qualität des Brühvorganges, wobei nach der Beaufschlagung des Dichtelementes mit Druck dieses wieder in eine Ausgangsposition zurückbewegt wird. Sofern der Druck jedoch nicht vollständig abgebaut wird, kann das Dichtelement verformt bleiben, was die Funktionalität beeinträchtigen kann.

Es ist daher Aufgabe der vorliegenden Erfindung eine Brühvorrichtung für einen Kaffeeautomaten zu schaffen, die eine zuverlässige Abdichtung einer Brühkammer gewährleistet und zudem verschleißunanfällig ist.

Diese Aufgabe wird mit einer Brühvorrichtung mit den Merkmalen des Anspruches 1 gelöst.

Erfindungsgemäß ist die an das flexible Dichtelement angrenzende Kammer zur Entlastung des Dichtelementes mit einem Entlüftungsventil verbunden, so dass nach dem Brühvorgang der Druck in der Kammer auf Umgebungsdruck reduziert wird und sich das Dichtelement frei in die Ausgangsposition zurückbewegen kann. Das Entlüftungsventil kann dabei vergleichsweise klein ausgebildet sein, da in der Regel nur geringe Mengen an Fluid, meist Luft oder Wasser abgeführt werden müssen. Dies gewährleistet jedoch den gleichen Druck auf beiden Seiten des Dichtelementes, so dass eine dauerhafte Verformung des Dichtelementes im unbenutzten Zustand vermieden wird.

Gemäss einer bevorzugten Ausgestaltung der Erfindung ist die Kammer über ein Überdruckventil mit einer Zuleitung zu der Brause verbunden. Die Zuleitung zu der Brause ist meist als Heizleitung ausgebildet, so dass in einer Nachheizphase sich in der Zuleitung ein Druck ausbilden kann. Dabei soll, allerdings ein erneutes Öffnen der Brause und das damit verbundene Nachtropfen an der Kaffeetasse verhindert werden. Daher kann sich ein entsprechender Druck in der Nachheizphase über das Überdruckventil entleeren, wobei die Kammer dann für einen Druckausgleich über das Entlüftungsventil sorgt. Das Überdruckventil kann zudem auch als Rückstromventil wirken, das im drucklosen Zustand verhindert, dass die Zuleitung zu der Brause entleert wird. Dies ermöglicht eine besonders gute Dosierung des geförderten Fluids.

Gemäss einer weiteren Ausgestaltung der Erfindung ist die Kammer über eine Pumpe mit Druck beaufschlagbar, die auch das Fluid zu der Brause fördert. Dadurch wird nur eine Pumpe zur Förderung des Wassers zu der Brause und zur Beaufschlagung der Kammer mit Druck benötigt. Die Verzweigung der Leitungen kann nach der Pumpe und vor einem Heizelement erfolgen.

Vorzugsweise ist die Brause über ein Brauseventil verschlossen, das bei Anstieg des Druckes in der Kammer über das Dichtelement geöffnet wird. Die Menge des durch das Brauseventil geförderten Fluides kann somit besonders gut dosiert werden.

Für eine kompakte Ausgestaltung der Brühvorrichtung kann das Entlüftungsventil und Überdruckventil über einen gemeinsamen Stößel miteinander gekoppelt sein. Dadurch wird die Anzahl der benötigten Bauteile vermindert, wobei der Stößel in eine Position vorgespannt ist, in der das Überdruckventil geschlossen und das Entlüftungsventil geöffnet ist. Erst bei Anstieg des Druckes in der Kammer zur Förderung eines Fluides wird das Entlüftungsventil verschlossen und das Überdruckventil geöffnet.

Die Erfindung wird nachfolgend anhand eines Ausführungsbeispieles mit Bezug auf die beigefügten Zeichnungen näher erläutert. Es zeigen:

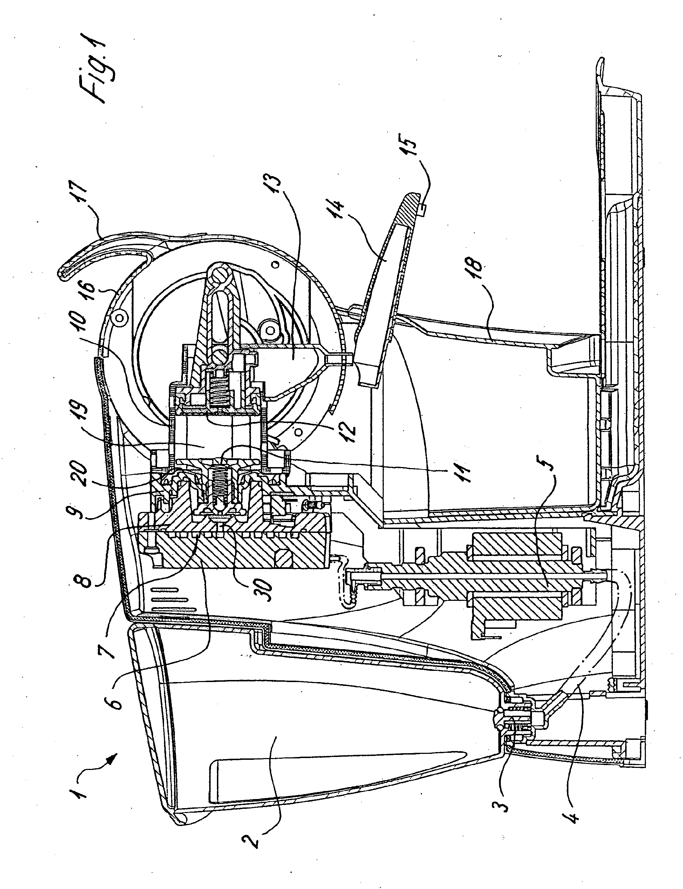

- Figur 1: Eine geschnittene Seitenansicht auf einen Kaffeeautomaten mit einer erfindungsgemäßen Brühvorrichtung, und
- Figur 2: Eine Detailansicht der Brühvorrichtung des Kaffeeautomaten der Figur 1.

Ein Kaffeeautomat 1 umfasst einen Vorratsbehälter 2 für Frischwasser, an dem ein Auslassventil 3 vorgesehen ist, das über eine Leitung 4 mit einer Pumpe 5 verbunden ist. Mittels der Pumpe 5 lässt sich das Wasser zu einer Heizplatte 6 führen, in der spiralförmige Durchgänge 7 ausgebildet sind, in denen das Wasser erhitzt werden kann. Benachbart ist eine Platte 8 vorgesehen, die Teil einer Brause bildet und in der eine Zuleitung 30 für das erhitzte Wasser vorgesehen ist. An der Platte 8 ist eine Halterung 9 für ein Dichtelement 20 montiert, das im Wesentlichen ringförmig ausgebildet ist und in dem mittig eine Düse 11 vorgesehen ist. Über die Düse 11 kann das erhitzte Wasser in eine Brühkammer 19 einströmen, die von einem Gehäuse 10 umgeben ist. Auf der gegenüberliegenden Seite der Düse 11 ist ein Boden 12 zur Begrenzung der Brühkammer 19 vorgesehen, in dem ein Abfluss ausgebildet ist, sodass das gebrühte Fluid durch einen trichterförmigen Auslass 13 zu einem Ausleger 14 strömt, an dem eine Auslassöffnung 15 zur Befüllung von Kaffeetassen vorgesehen ist.

Der Kaffeeautomat 1 umfasst eine Brühkammer 19, in der ein oder mehrere Portionspackungen mit Kaffee einfügbar sind. Hierfür ist eine Abdeckung 16 vorgesehen, an der ein Griff 17 ausgebildet ist, über den das Gehäuse 10 über eine Betätigungsmechanik von der Brause gelöst und verschwenkt werden kann, sodass die Brühkammer 19 von oben befüllt wird. Anschließend wird die Abdeckung 16 verschlossen und das Gehäuse 10 in die gezeigte Position bewegt. Nach dem Brühvorgang werden dann die Portionspackungen in einen Sammelbehälter 18 entleert, um die Brühkammer 19 erneut zu befüllen. Für den Gegenstand der vorliegenden Anmeldung können jedoch völlig unterschiedliche Betätigungsmechaniken verwendet werden, um die Brühvorrichtung mit ein oder mehreren Portionspackungen zu befüllen.

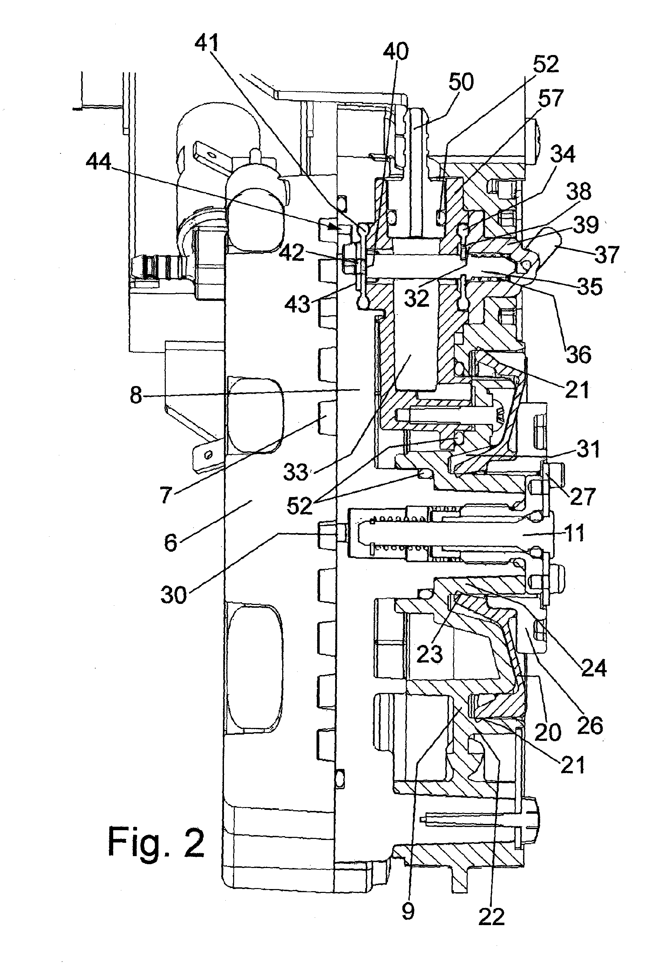

In Figur 2 ist ein Teil der Brühvorrichtung des Kaffeeautomaten 1 im Detail dargestellt.

An der Halterung 9 ist das ringförmige Dichtelement 20 angebracht, wobei an dem Dichtelement 20 eine äußere Dichtlippe 21 an einem Steg 22 der Halterung 9 und eine innere Dichtlippe 23 an einem Steg 24 der Halterung 9 anliegt. Zwischen Halterung 9 und Dichtelement 20 ist somit eine ringförmige Kammer 31 ausgebildet, die dafür sorgt, dass bei einer Beaufschlagung der Kammer 31 mit Druck das Dichtelement 20 zu der Brühkammer 19 hin bewegt wird. Mit dem Dichtelement 20 ist dabei ein plattenförmiges Druckelement 26 gekoppelt, das gegen die Wand einer Portionspackung mit Kaffeemehl gedrückt werden kann. Das Dichtelement 20 sowie das plattenförmige Druckelement 26 sind dabei bis zu einem Anschlag bewegbar, der durch einen hervorstehenden Flansch 27 an der Düse gebildet ist.

Die Kammer 31 ist dabei unmittelbar mit einer Ventilkammer 33 verbunden, die über eine Zuleitung 50 mit Wasser versorgt werden kann, das die Pumpe 5 fördert. Die Zuleitung 50 kann dabei hinter der Pumpe 5 vor der Heizlplatte 6 angeschlossen sein.

An der Ventilkammer 33 sind zei Ventile vorgesehen. Ein Entlüftungsventil 32 verbindet die Ventilkammer 33 mit einer Entlüftungsleitung 37. Dabei ist das Entlüftungsventil 32 durch eine Membran 34 gebildet, in der ein oder mehrere Öffnungen 38 ausgespart sind. Die Membran 34 ist dabei auf einer Seite an einem Einsatz 51 und der Halterung 9 festgelegt und an der Innenseite an einem bewegbaren Stößel 35. Der Stößel 35 ist über eine Feder 36 in Figur 2 nach links vorgespannt, so dass die Öffnung 38 nicht durch eine Wand eines Ventilgehäuses 39 verschlossen ist.

Wenn der Druck in der Ventilkammer 33 durch die Pumpe 5 erhöht wird, wird die Membran 34 mit Druck beaufschlagt und bewegt den vorgespannten Stößel 35 nach rechts, so dass das Entlüftungsventil 32 verschlossen wird.

Auf der gegenüberliegenden Seite des Stößels 35 ist ein Überdruckventil 44 vorgesehen, das mit den spiralförmigen Durchgängen 7 der Heizplatte 6 verbunden ist. Das Überdruckventil 44 umfasst eine zweite Membran 41, die zwischen der Halterung 51 und der Platte 8 außen festgelegt ist. Die Membran 41 ist dabei über eine Stützscheibe 43 an der Platte 8 abgestützt wobei Membran 41 und Stützscheibe 43 mit einer Durchgangsöffnung 42 versehen sind, die mit den Durchgängen 7 verbunden sind. Die Durchgangsöffnung 42 ist durch eine Stirnseite 40 des Stößels 35 verschlossen.

Ferner ist der Einsatz 51 über mehrere Dichtelemente 52 abgedichtet zwischen der Platte 8 und der Halterung 9 aufgenommen.

Nachfolgend wird die Arbeitsweise der Brühvorrichtung im Detail beschrieben, wobei in Figur 2 der drucklose Zustand gezeigt ist, in der die Pumpe 5 ausgeschaltet ist und das Entlüftungsventil 32 geöffnet ist.

Wird die Pumpe 5 eingeschaltet, strömt das Wasser über den Wassereinlass 50 in die Ventilkammer 33 und die Kammer 31. Dadurch bewegt sich das Dichtelement 20 zu der Brühkammer 19, dichtet diese ab und öffnet gleichzeitig ein Brauseventil, so dass geheiztes Wasser durch die Düse 11 durch die Brühkammer 19 strömen kann. Dadurch wird der Staudruck in den Durchgängen 7 in die Brühkammer 19 entleert.

In einer ersten Phase liegt die Stirnkante 40 des Stößels 35 an der Durchgangsöffnung 42 an, so dass die Durchgänge 7 von der Ventilkammer 33 abgetrennt sind. Gleichzeitig wird über die Öffnung 38 des Entlüftungsventils 32 die Ventilkammer 33 entlüftet. Dadurch können eingeschlossene Luft und gegebenenfalls Wasser zu der Entlüftungsleitung 37 abgeführt werden.

Steigt nun der Druck in der Ventilkammer 33 an, bewegt sich der Stößel 35 aufgrund der Membran 34 nach rechts und verschließt das Entlüftungsventil 32. Dadurch wird gleichzeitig die Durchgangsöffnung 40 zu den Durchgängen 7 freigegeben. Die Brühvorrichtung befindet sich nun in Arbeitsstellung und das geheizte Wasser kann durch die Düse 11 in die Brühkammer 19 strömen. In diesem Zustand ist der statische Druck in der Brühkammer 11 den Durchgängen 7 der Ventilkammer 33 und der Kammer 31 gleich.

Wird die Pumpe 5 ausgeschaltet baut sich der Druck zunächst über die Düse 11 und das Brauseventil ab, bis die Feder 36 den Stößel 35 wieder auf die Öffnung 42 drückt und somit das Entlüftungsventil 32 geöffnet wird und die Öffnung 38 nicht mehr an dem Gehäusedeckel 39 anliegt. Dadurch wird das Dichtelement 20 entlastet und kann sich in die Ausgangsposition zurückbewegen, wodurch auch das Brauseventil verschlossen wird.

Die Entlüftung der Ventilkammer 32 erfolgt über die Öffnung 38 in der Membran 34. Die Entlüftung bewirkt dabei einerseits die vollständige Entlastung des Dichtelementes 20 und andererseits wird gewährleistet, dass das Brauseventil ohne Kraftaufwand wieder schließen kann. Ferner muss die Pumpe 5 bei Wassermangel im Tank 2 nicht Gegendruck ansaugen, was diesen Vorgang erheblich beschleunigt.

Das Überdruckventil 42 hat ferner die Funktion eines Rückstromventils, dass das Wasser in den Durchgängen 7 der Heizplatte 6 nicht entleert werden kann. Denn das Überdruckventil 44 sowie das Brauseventil sorgen dafür, dass das in den Durchgängen 7 enthaltene Wasser dort verbleibt und sich in der Nachheizphase die Durchgänge 7 nicht entleeren. Dadurch wird eine besonders genaue Dosierung der Flüssigkeitsmenge möglich.

Ferner besitzt das Überdruckventil 44 eine Funktion in der Nachheizphase, wenn in den Durchgängen 7 Heizplatte 6 sich der Druck in Folge einer Erhitzung erhöht. Die Kraft der Feder 36 kann so ausgelegt sein, dass der Druck in der Nachheizphase begrenzt wird und bei Bedarf der Stößel 35 durch den entstehenden Überdruck nach rechts bewegt wird und das Fluid zum Druckausgleich an den Durchgängen in die Ventilkammer 33 abgelassen werden kann. Es ist dabei denkbar, dass die Druckdifferenz zur Auslösung des Überdruckventils durch entsprechende Gestaltung der Feder 36 eingestellt werden kann.

In dem dargestellten Ausführungsbeispiel sind Entlüftungsventil 32 und Überdruckventil 44 über einen gemeinsamen Stößel 35 miteinander gekoppelt. Es ist natürlich auch möglich, Entlüftungsventil 32 und Überdruckventil 44 getrennt voneinander vorzusehen. Auch andere Ventile können eingesetzt werden.

## Patentansprüche

1. Brühvorrichtung für einen Kaffeeautomaten, insbesondere für den Haushaltsbereich, mit einem eine Brühkammer (19) umgebenden Gehäuse (10), an dessen einer Seite eine Brause (8, 9, 11) und einer gegenüberliegenden Seite ein Boden (12) mit einem Abfluss (40) für das gebrühte Fluid angeordnet ist, wobei zwischen Brause (8, 9, 11) und Gehäuse (10) ein flexibles Dichtelement (20) vorgesehen ist, auf dessen einer Seite die Brühkammer (19) und auf der gegenüberliegenden Seite eine mit Fluid befüllbare Kammer (31) angeordnet ist, und über einen Druckanstieg in der Kammer (31) das Dichtelement (20) zu der Brühkammer (19) hin bewegbar ist, **dadurch gekennzeichnet, dass** die Kammer (31) zur Entlastung des Dichtelementes (20) mit einem Entlüftungsventil (32) verbunden ist.

2. Brühvorrichtung nach Anspruch 1, **dadurch gekennzeichnet, dass** die Kammer (31) über ein Überdruckventil (44) mit einer Zuleitung (7) zu der Brause (8, 9, 11) verbunden ist.

3. Brühvorrichtung nach Anspruch 2, **dadurch gekennzeichnet, dass** das Überdruckventil (44) auch als Rückstromventil wirkt, das im drucklosen Zustand verhindert, dass die Zuleitung (7) zu der Brause (8, 9, 11) entleert.

4. Brühvorrichtung nach Anspruch 1, **dadurch gekennzeichnet, dass** die Kammer (31) über eine Pumpe (5) mit Druck beaufladbar ist, die auch das Fluid zu der Brause (8, 9, 11) fördert.

5. Brühvorrichtung nach einem der Ansprüche 1 bis 4, **dadurch gekennzeichnet, dass** die Brause (8, 9, 11) über eine Brauseventil verschlossen, das welches bei Anstieg des Druckes in der Kammer (31) über das Dichtelement (20) geöffnet wird.

6. Brühvorrichtung nach einem der Ansprüche 1 bis 5, **dadurch gekennzeichnet, dass** das Entlüftungsventil (32) und Überdruckventil (44) über einen gemeinsamen Stößel (35) miteinander gekoppelt sind.

7. Brühvorrichtung nach Anspruch 6, **dadurch gekennzeichnet, dass** der Stößel (35) in eine Position vorgespannt ist, in der das Überdruckventil (44) geschlossen unter das Entlüftungsventil (32) geöffnet ist.

8. Brühvorrichtung nach einem der Ansprüche 6 oder 7, **dadurch gekennzeichnet, dass** das Entlüftungsventil (32) eine mit dem Stößel (35) gekoppelte Membran (34) umfasst.
